(19) Europäisches Patentamt / European Patent Office / Office européen des brevets

(11) **EP 4 488 607 B1**

(12) **EUROPEAN PATENT SPECIFICATION**

(45) Date of publication and mention of the grant of the patent:
**14.01.2026 Bulletin 2026/03**

(21) Application number: **24183045.4**

(22) Date of filing: **19.06.2024**

(51) International Patent Classification (IPC):
**F27B 7/42** (2006.01)    **F27B 7/20** (2006.01)
**F27D 25/00** (2010.01)

(52) Cooperative Patent Classification (CPC):
**F27B 7/42;** F27B 7/2075; F27D 25/00

(54) **METHOD AND SYSTEM FOR MONITORING ACCRETION IN A ROTARY KILN**

VERFAHREN UND SYSTEM ZUR ÜBERWACHUNG DES ABSETZENS IN EINEM DREHROHROFEN

PROCÉDÉ ET SYSTÈME DE SURVEILLANCE DE L'ACCRÉTION DANS UN FOUR ROTATIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.07.2023 IN 202321044276**

(43) Date of publication of application:
**08.01.2025 Bulletin 2025/02**

(73) Proprietor: **Tata Consultancy Services Limited Maharashtra (IN)**

(72) Inventors:
- **DEODHAR, ANIRUDH**
  411006 Pune- Maharashtra (IN)
- **SINGHAL, TANMAYA**
  411057 Pune - Maharashtra (IN)
- **PATEL, JANAK MAHESHBHAI**
  411013 Pune- Maharashtra (IN)
- **JADHAV, VISHAL SUDAM**
  411006 Pune - Maharashtra (IN)
- **RUNKANA, VENKATARAMANA**
  411013 Pune - Maharashtra (IN)
- **SASIDHARAN, SABARILAL**
  110001 Delhi (IN)

(74) Representative: **Goddar, Heinz J.**
**Boehmert & Boehmert**
**Anwaltspartnerschaft mbB**
**Pettenkoferstrasse 22**
**80336 München (DE)**

(56) References cited:
CN-A- 110 262 224    CN-B- 102 305 614
US-A1- 2018 106 683    US-B2- 8 340 825

EP 4 488 607 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

PRIORITY

The present application claims priority to Indian application no. 202321044276, filed on July 02, 2023.

TECHNICAL FIELD

The disclosure herein generally relates to accretion monitoring, and, more particularly, to a method and a system for monitoring accretion in a rotary kiln.

BACKGROUND

A rotary kiln is a pyro-processing device that is used to raise materials to a high temperature in a continuous process. The kiln is basically a cylindrical vessel, which is inclined slightly on the horizontal axis so that it can slowly rotate about its axis. The rotary kilns are extensively used in the cement, minerals, metals and chemical industries for various purposes.

One of the most critical problems faced by users of the rotary kiln is 'accretion' that happens inside the rotary kiln over a period of time. For a sponge iron rotary kiln, accretion occurs due to deposition of ash present in coal and possibly some gangue material present in the iron ore. The thickness of the deposited layer increases as the time progresses which ultimately leads to choking or jamming of the rotary kiln. Once the rotary kiln is jammed, it cannot be operated. Hence, the rotary kiln needs to be shut down so that the deposited material can be removed mechanically. The shutdown of the rotary kiln further results in reduced plant availability which ultimately leads to reduction in production.

There will always be some variations in fuel quality, kiln conditions and ambient conditions of the kiln, thus fluctuation in kiln operation is always expected. Further, as the operation of the rotary kiln involves complex phenomena and multiple parameter, the quality of the production largely depends upon a complex interplay of multiple parameters such as fuel quality, air distribution, raw material quality, kiln condition, residence time of material and so on. So, to achieve the desired quality of the product, the kiln operator has to use his expertise which sometimes results in quality variations which ultimately results in financial loss.

Some of the control systems that are available for plants typically consider ideal design conditions, which makes them non-suitable for continuously changing conditions and requirements that arise in daily operation of rotary kiln. Additionally, advanced sensors and cameras that are required for monitoring temperature and other parameters of the rotary kiln are typically very expensive. US 2018/106683 A1 discloses system and a method for accretion detection within an iron kiln. The iron kiln includes a cylindrical body for holding and processing molten iron ore. In one embodiment, method includes receiving, in real-time, a first plurality of temperature values from a plurality of sensors configured on distinct locations on the outer surface of the iron kiln and is associated with a distinct sensor ID. The plurality of temperature values are compared with a reference temperature value to identify deviation in temperature gradient associated with the outer surface. Subsequently on identifying the deviation corresponding to one or more sensors, a second plurality of temperature values of surrounding locations of the one or more sensors is recorded and the presence of the accretion in the iron kiln is determined based on the second plurality of temperature values. US 8 340 825 B2 discloses method and a device for controlling a process for burning lime containing mixture (CaCO3) and converting it to calcinated lime (CaO) in a rotary kiln, the rotary kiln having an elongated cavity surrounded by a wall and a burner arranged to heat the cavity. The method includes collecting measurement data of the temperature in the wall at a plurality of measuring points along the longitudinal axis of the cavity, predicting the actual temperature gradient along the longitudinal axis of the cavity based at least on the measurement data of the temperature in the wall, and by means of a thermal model describing the temperature along the cavity of the kiln, determining a desired temperature gradient along the cavity based on the predicted temperature gradient along the cavity and a predetermined control strategy controlling the temperature in the kiln. CN 102 305 614 B discloses a method for detecting and forecasting thickness of accretion of an iron ore oxidized pellet, wherein the thickness of accretion of the iron ore oxidized pellet rotary kiln is calculated by adopting following formula as a accretion thickness model: FORMULA, and the thickness of the accretion is forecast by using a history curve about change of the temperature of the kiln outer wall and the accretion thickness model. The method for detecting and forecasting thickness of accretion of iron ore oxidized pellet rotary kiln detects the accretion in the rotary kiln in real time, forecasts the thickness of the accretion, provides operation reference for the site, delays the generating speed of the accretion, removes the accretion timely, and improves the utilization rate of rotary kiln equipment. CN 110 262 224 A discloses a kind of high online rate style of opening cement kiln intelligent optimization expert systems, including the expert control system server run on host computer server, it passes through interchanger, it is connect using OPC communications protocol with DCS control system both-way communication, all control points are all made of double loop control, expert control system server includes Model Predictive Control external member, neural network external member, fuzzy control external member, Techniques of Optimum external member, soft-measuring technique external member and adaptation function external member, kiln tail high-temperature flue gas on-line analysis system is added on rotary cement kiln system, kiln hood clinkering zone thermometric analysis system, acquisition signal is simultaneously transmitted to DCS control system by oblique pull chain clinker intelligent infrared temperature-measuring system, it is mating on raw material preparation system to be provided with neutron cross-line analyzer.

SUMMARY

Embodiments of the present disclosure present technological improvements as solutions to one or more of the above-mentioned technical problems recognized by the inventors in conventional systems. The invention is set out in appended set of claims.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an example representation of an environment, related to at least some example embodiments of the present disclosure.

FIG. 1A is an example representation of a rotary kiln, related to at least some example embodiments of the present disclosure.

FIG. 2 illustrates an exemplary block diagram of a system for monitoring accretion in a rotary kiln, in accordance with an embodiment of the present disclosure.

FIG. 3 illustrates an exemplary flow diagram of a method for monitoring accretion in the rotary kiln, in accordance with an embodiment of the present disclosure.

FIG. 4 illustrates an exemplary flow diagram of a method for computing accretion score, in accordance with an embodiment of the present disclosure

FIG. 5 is a schematic representation of a thermal model, in accordance with an embodiment of the present disclosure.

FIG. 6 is a schematic representation of an accretion probability estimation model, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the invention, as disclosed in the appended claims.

In steel industry, direct reduction of iron ore to produce sponge iron or direct reduced iron (DRI) is carried out in a rotary kiln. The reduction takes place in the rotary kiln in a counter current fashion. One of the critical variables in the direct reduction process is the temperature profile inside the kiln. The temperature profile of the rotary kiln available on-line is accurate only during the initial period of operation and its accuracy deteriorates over a period of time due to accretion that happens inside the kiln.

Thus, the operator of the rotary kiln is left with essentially no on-line information about the reduction process which makes the operator to take corrective actions based on hourly laboratory analysis and kiln shell temperatures. There are several variables, such as air flow rates, coal flow rates and kiln speed, which can be manipulated in order to control the process. As these corrective measures are taken manually mostly by the kiln operator, the kiln performance is bound to be sub-optimal. In addition to this, accretion inside the kiln compounds the problems faced by plant engineers and operators. It would be highly beneficial if plant engineers/operators are provided with an on-line optimization and control system for maximizing kiln productivity and for maintaining sponge iron quality at the desired level, which can lead to higher plant profitability.

So, predictive optimization for direct reduction of iron ore by coal in the rotary kiln will be an invaluable tool as it would then be possible to predict not only the gas and solid temperature profiles inside the kiln but also degree of metallization, gas flow rate and its composition.

The Applicant has addressed concerns and limitations in the art in the applicants Indian Patent Application No: 2235/MUM/2007 filed on 12 November 2007, and US patent application No:US20220179400A1 by providing real-time soft sensing of kiln variables, product quality as well as real-time optimization of kiln operation.

As discussed earlier, accretion affects not only kiln throughput but also coal utilization as it reduces the effective kiln volume and the efficiency of heat transfer between kiln surface, gases and solids. Effective heat transfer between gases, solids and kiln walls is very critical for efficient production of sponge iron as it controls drying and preheating of iron ore and coal, kinetics of various reactions occurring inside the kiln and also formation of different phases, which in turn control accretion.

Though accretion cannot be avoided completely, it may be possible to reduce the rate of accretion by manipulating the variables such as flow rate of iron ore, flow rates of feed and injection coal, flow rates of primary and secondary air, and kiln speed if the accretion that is happening inside can be measured accurately.

The approach discussed in Indian Patent Application No: 2235/MUM/2007 filed on 12 November 2007, and US patent application No: US20220179400A1 focuses only on soft sensing and kiln operation optimization part. However, for effective and optimum operation of the rotary kiln, real-time and comprehensive monitoring and quantification of the accretion is necessary. Most rotary kilns lack advanced sensing technology and therefore have a minimal quantification of accretion possible.

Embodiments of the present disclosure overcome the above-mentioned disadvantages by providing a method and a system for monitoring accretion in a rotary kiln. The system of the present disclosure uses an accretion localization module to obtain accretion cluster information which comprise position of accretion and reference clusters. Then, the system estimates a heat transfer metrics (HTM) for each point present in each of the reference cluster and the accretion cluster. Thereafter, the system uses the HTM and real-time data of the rotary kiln to estimate accretion probability score. Further, the system obtain the accretion score for the rotary kiln based on the accretion probability score and the HTM.

In the present disclosure, the system and the method use thermal model for measuring temperatures and HTM which otherwise cannot be measured without the use of advanced sensors, thereby ensuring accurate calculation of the accretion probability scores which ultimately leads to accurate real-time monitoring of the accretion condition of the rotary kiln. Further, the accretion score obtained by the system and the method represent accretion locations in the rotary kiln as well as the extent of accretion which further help in determining actionable inputs that can be provided to the user in form of operable actions. The operable actions, once taken by the user, increases the kiln campaign life which ultimately increases industrial plant availability and the production.

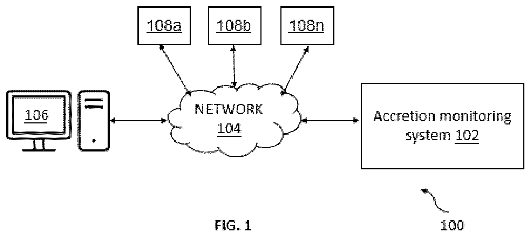

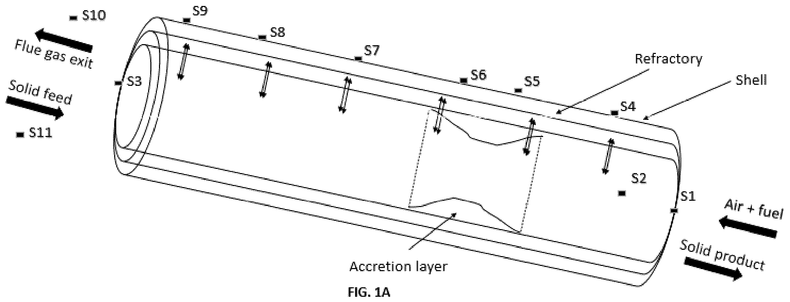

Referring now to the drawings, and more particularly to FIGS. 1 through 6, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, computing accretion score, obtaining cluster information, etc. The environment 100 generally includes an accretion monitoring system 102, an electronic device 106 (hereinafter also referred as a user device 106), and a plurality of data sources 108a-108n, each coupled to, and in communication with (and/or with access to) a network 104. It should be noted that one user device is shown for the sake of explanation; there can be more number of user devices.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user device 106 is associated with a user (e.g., a kiln operator/plant engineer) who is responsible for managing rotary kiln. Examples of the user device 106 include, but are not limited to, a personal computer (PC), a mobile phone, a tablet device, a Personal Digital Assistant (PDA), a server, a voice activated assistant, a smartphone, and a laptop.

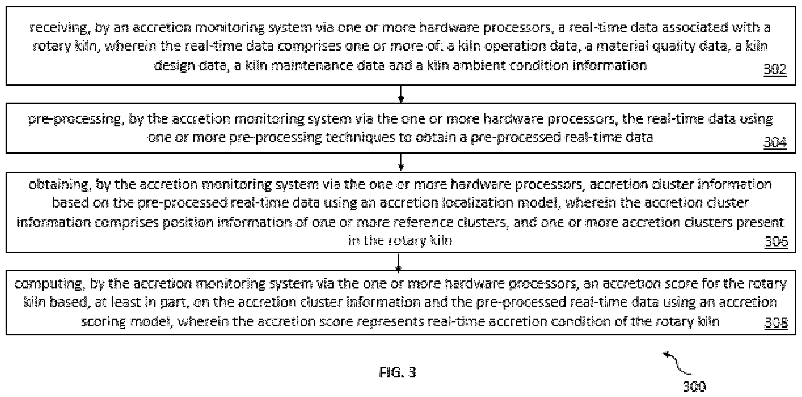

The accretion monitoring system 102 includes one or more hardware processors and a memory. The accretion monitoring system 102 is first configured to receive a real-time data associated with a rotary kiln (shown with reference to FIG. 1A) via the network 104 from the plurality of data sources 108a-108n. In an embodiment, the plurality of data sources 108a-108n may include, but are not limited to, distributed control system (DCS), historian, laboratory information management system (LIMS), manufacturing execution systems (MES), manual input etc. The real-time data includes one or more of a kiln operation data, a material quality data, a kiln design data, a kiln maintenance data and a kiln ambient condition information. The accretion monitoring system 102 then preprocess the received real-time data to obtain preprocessed real-time data. Thereafter, the accretion monitoring system 102 obtains accretion cluster information based on the pre-processed real-time data using an accretion localization model. Further, the accretion monitoring system 102 computes an accretion score for the rotary kiln based on the accretion cluster information and the pre-processed real-time data using an accretion scoring model. Finally, the accretion monitoring system 102 displays the accretion score on a user device, such as the user device 106. The process of monitoring a rotary kiln is explained in detail with reference to FIG. 3.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 1A illustrates an exemplary representation of a rotary kiln, in accordance with an embodiment of the present disclosure.

As seen in FIG. 1A, the rotary kiln includes a plurality of sensors S1-S11 for measuring a plurality of variables, such as kiln temperature, pressure, flow etc., along with a plurality of other components. In an embodiment, the rotary kiln may include additional sensors (not shown in FIG. 1A), such as thermocouples that are added around the identified accretion clusters to enhance accuracy of accretion monitoring.

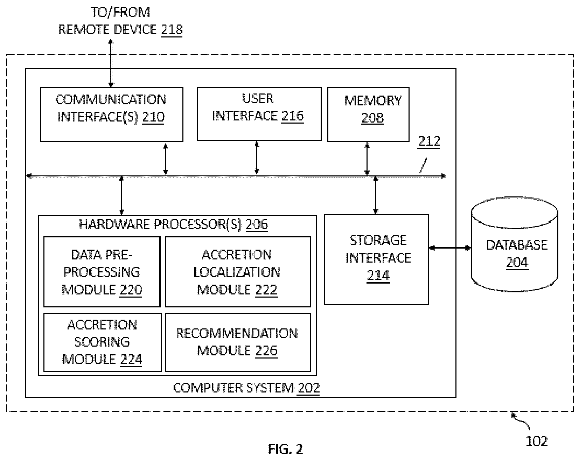

FIG. 2 illustrates an exemplary block diagram of an accretion monitoring system 102 for monitoring accretion happening in a rotary kiln, in accordance with an embodiment of the present disclosure. In an embodiment, the accretion monitoring system 102 may also be referred as system 102 and may be interchangeably used herein. In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

The system 102 includes a computer system 202 and a system database 204. The computer system 202 includes one or more processors 206 for executing instructions, a memory 208, a communication interface 210, and a user interface 216 that communicate with each other via a bus 212.

The memory 208 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the system database 204 can be stored in the memory 208, wherein the system database 204 may comprise, but are not limited to, real-time data, pre-processed real-time data, pre-processing algorithms, kiln operator knowledge, such as thumb rules, operation guidelines, failure model analysis rules, manual inputs, optimization models and their metadata, accretion localization model, accretion scoring model and the like. The memory 208 further comprises (or may further comprise) information pertaining to input(s)/output(s) of each step performed by the systems and methods of the present disclosure. In other words, input(s) fed at each step and output(s) generated at each step are comprised in the memory 208 and can be utilized in further processing and analysis.

In some embodiments, the system database 204 is integrated within computer system 202. For example, the computer system 202 may include one or more hard disk drives as the system database 204. A storage interface 214 is any component capable of providing the one or more processors 206 with access to the system database 204. The storage interface 214 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the one or more processors 206 with access to the system database 204.

In some embodiment, the system database 204 is a combination of a plurality of databases, such as a model database, an equipment database, a material database, an equipment database, an operation data database, a processed data database, a maintenance database, an environment database, a knowledge database and the like.

The one or more processors 206 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory 208.

The one or more processors 206 are operatively coupled to the communication interface 210 such that the one or more processors 206 communicate with a remote system 218 such as, the user device 106, or communicated with any entity (for e.g., the data sources 108a-108n) connected to the network 104. Further, the one or more processors 206 are operatively coupled to the user interface 216 for interacting with users, such as the user/kiln operator of the plant who is responsible for operating and handling the rotary kilns present in an industrial plant.

In one embodiment, the one or more processors 206 includes a data pre-processing module 220, an accretion localization module 222, an accretion scoring module 224, and a recommendation module 226.

The data pre-processing module 220 includes suitable logic and/or interfaces for receiving the real-time data associated with a rotary kiln from the plurality of data sources. The real-time data includes one or more of a kiln operation data, a material quality data, a kiln design data, a kiln maintenance data and a kiln ambient condition information.

In an embodiment, the kiln operation data include, but are not limited to, mass flow rate of air, fuels and solids going into the rotary kiln, pressures at entry exit, temperatures of shell, solids and gases, gas composition at exit, kiln rotation Revolutions Per Minute (RPM), kiln tilt etc. The material quality data include feed quality, such as moisture, impurities, size etc., product quality, such as size, specific quality parameters, composition etc., fuel quality, such as calorific value, composition etc. The kiln design data include length and diameter of the rotary kiln, refractory, shell architecture, dimensions and the like. The kiln maintenance data includes history of maintenance actions relevant to the rotary kiln and surrounding equipment. For instance, timeline of mechanical clean-up of accretion, or timeline of any intermediate modifications to upstream equipment, such as filters, or downstream equipment such as coolers, cyclones, electrostatic precipitators along with other details. The kiln ambient condition information includes temperature, pressure and humidity details associated with the rotary kiln.

The data pre-processing module 220 is then configured to perform pre-processing of the received real-time data using one or more pre-processing techniques to obtain a pre-processed real-time data as some data may require pre-processing to make them usable as per the requirement of the system 102. In an embodiment, the data pre-processing module 220, without limiting the scope of the embodiments disclosed herein, synchronizes the real-time data coming from the plurality of sources at different frequencies, cleans the real-time data by removing outliers based on outlier removal model, augments the cleaned real-time data by imputation model and finally transforms the cleaned data based on a transformation model. In one embodiment, the transformation of cleaned data may involve processing of the cleaned data at a certain frequency, numerical transformation and regime-based separation of the cleaned data. The regimes may be identified based on fuel quality, product quality, operating conditions and maintenance actions. In one embodiment, the data pre-processing module 220 stores the pre-processed real-time data in the system database 204.

The accretion localization module 222 includes suitable logic and/or interfaces for accessing the pre-processed real-time data that is stored in the system database 204. Once the pre-processed real-time data is available, the accretion localization module 222 is configured to obtain accretion cluster information based on the pre-processed real-time data using the accretion localization model. The accretion cluster information includes position information of one or more reference clusters, and one or more accretion clusters present in the rotary kiln.

In particular, the accretion localization module localizes accretion position within the rotary kiln based on the pre-processed real-time data using a pre-trained thermal model and a temperature tracking algorithm comprised in the accretion localization model.

The accretion scoring module 224 is in communication with the accretion localization module 222. The accretion scoring module 224 includes suitable logic and/or interfaces for computing an accretion score for the rotary kiln based on the accretion cluster information and the pre-processed real-time data using an accretion scoring model. The accretion score represents real-time accretion condition of the rotary kiln. In an embodiment, the accretion score can be a single number. In another embodiment, the accretion score can be a set of numbers.

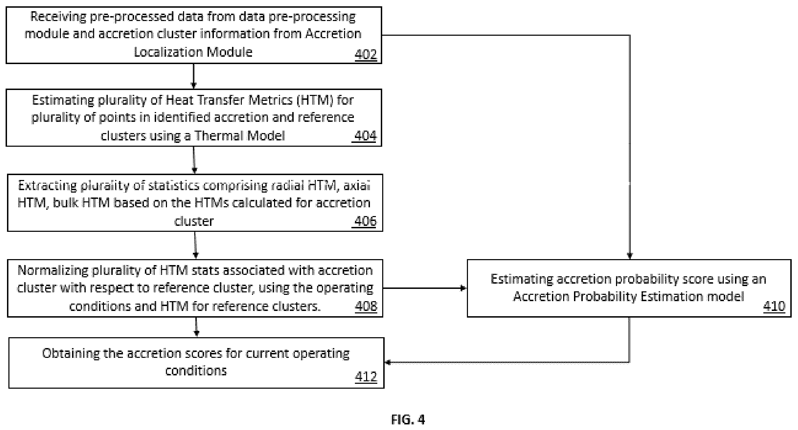

In an embodiment, the accretion scoring module 224 may use an accretion probability estimation model along with the pre-trained thermal model for computing the accretion score for the rotary kiln. The process of computing the accretion score using the accretion probability estimation model and the pre-trained thermal model is explained in detail with reference to FIG. 4. Once the accretion score for the rotary kiln is available, the one or more processors 206 display the accretion score to the user via the user interface 216.

The recommendation module 226 includes suitable logic and/or interfaces for recommending one or more operable actions that can be performed to minimize the rate of accretion based on the accretion score computed by the accretion scoring module 224. In particular, the recommendation module 226 checks the accretion scores estimated by the accretion scoring module 224 and identifies a right set of operable actions to be recommended to the user based on the accretion score.

The right set of operable actions include operation and maintenance related recommendations that can improve the operation of the rotary kiln.

In at least one example embodiment, the identification of the right set of operable actions is done using a predefined action recommendation technique. In an embodiment, the predefined action recommendation technique is based on an algorithmic optimization. In another embodiment, the predefined action recommendation technique is based on a knowledge-driven optimization.

In an embodiment, the recommendation module 226 is also configured to display the one or more operable actions on the user device. The one or more operable actions may include, but are not limited to, rescheduling of maintenance of the rotary kiln, change in design of the rotary kiln, raw material used in the rotary kiln, and change in operation of the rotary kiln. The user, upon viewing the one or more operable actions, may implement at least one operable action on the rotary kiln to improve the operation of the rotary kiln.

In at least one example embodiment, the recommendation module 226 may directly implement the one or more operable actions in the rotary kiln via its DCS.

It is noted that the system 102 as illustrated and hereinafter described is merely illustrative of a system that could benefit from embodiments of the present disclosure and, therefore, should not be taken to limit the scope of the present disclosure. It is noted that the system 102 may include fewer or more components than those depicted in FIG. 2.

FIG. 3, with reference to FIGS. 1 and 2, represents an exemplary flow diagram of a method 300 for monitoring accretion in the rotary kiln, in accordance with an embodiment of the present disclosure. The method 300 may use the system 102 of FIGS. 1 and 2 for execution. In an embodiment, the system 102 comprises one or more data storage devices or the memory 208 operatively coupled to the one or more hardware processors 206 and is configured to store instructions for execution of steps of the method 300 by the one or more hardware processors 206. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 302 of the present disclosure, the one or more hardware processors 206 of the system 102 receive real-time data associated with a rotary kiln. The real-time data includes one or more of a kiln operation data, a material quality data, a kiln design data, a kiln maintenance data and a kiln ambient condition information.

At step 304 of the present disclosure, the one or more hardware processors 206 of the system 102 preprocess the real-time data using one or more pre-processing techniques to obtain a pre-processed real-time data.

At step 306 of the present disclosure, the one or more hardware processors 206 of the system 102 obtains accretion cluster information based on the pre-processed real-time data using an accretion localization model. In an embodiment, the accretion cluster information comprises position information of one or more reference clusters, and one or more accretion clusters present in the rotary kiln. The above step is better understood by way of following description.

As discussed earlier, accretion within the rotary kiln may occur at different locations as the operating conditions, raw material composition and maintenance actions change during the operation of the rotary kiln. Most of the rotary kilns lack advanced measurements of accretion happening inside the rotary kiln. Even in presence of advanced sensors such as thermal imaging cameras, it gets difficult to identify the exact extent and location of accretion within the rotary kiln. So, to localize the accretion position within the kiln, the accretion localization module 222 present in the system 102 obtains the accretion cluster information based on the pre-processed real-time data using the accretion localization model.

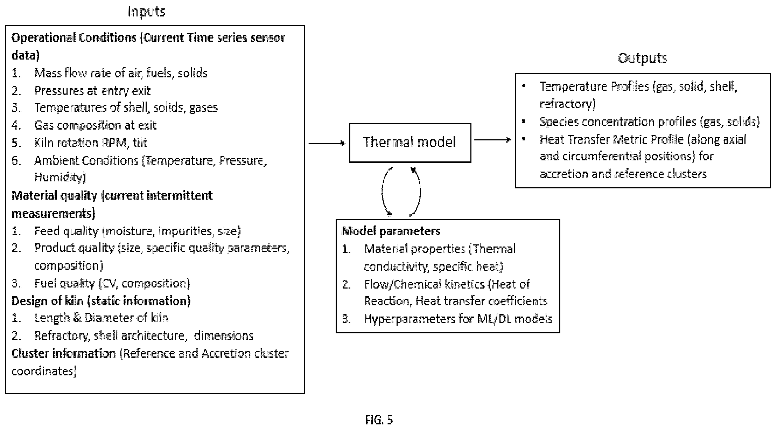

In an embodiment, the accretion localization model comprises a thermal model (shown with reference to FIG. 5). The thermal model, without limiting the scope of the invention, can be a physics-based model, a data-driven model or a physics-informed data driven model (such as physics-informed neural network). The thermal model determines one or more temperature profiles of solid and gas across length of the rotary kiln, and mass flow rate of material carried over upstream in the rotary kiln based on the pre-processed real-time data, such as the kiln operation data, the material quality data, the kiln design data, and the kiln ambient condition information. In one embodiment, the thermal model is tuned to accurately predict the one or more temperature profiles and the mass flow rate.

In at least one example embodiment, the thermal model may include a physics-informed neural network (PINN) model that predicts a thermal map of the rotary kiln in real-time based on mass-momentum and energy balance equations with tuning parameters such as heat transfer coefficient and kinetics and the measurements available. In the PINN model, a system of ordinary/partial differential equations and algebraic equations are solved using neural network approach to ensure that the results are obtained in real time or near real time. The inputs to the model are generally operational conditions, design and material characteristics, ambient conditions, tuning parameters and other inputs such as calorific value, composition and properties of the fuel used, size distribution of the raw material as well as its moisture content. Further, the design parameters, such as dimensions of the rotary kiln, cooler and other equipment along with the rotational speed and tilt angle of the rotary kiln are also considered as input to the model. Additionally, the effect of ambient conditions is also considered by taking the ambient temperature, pressure and humidity as inputs. The inputs can be provided in different ways such as network inputs, network constraints or network loss functions. The model then predicts the gas temperature profile across the length of the kiln, solid temperature profile and mass flow rate of the material carried over upstream. Thereafter, the tuning of the model is done based on historical data of the plant or based on process knowledge. The tuning parameters of the thermal model may include heat transfer coefficients, chemical kinetic parameters as well as parameters indicating kiln accretion or deposition conditions. The tuning parameters may be automatically tuned while training of the PINN model.

Once the one or more temperature profiles and the mass flow rate are available, the accretion localization model identifies position of the one or more accretion clusters and the one or more reference clusters present in the rotary kiln based on the determined one or more temperature profiles and the mass flow rate using a temperature tracking algorithm comprised in the accretion localization model.

In particular, the temperature tracking algorithm detects one or more alterations in measured and predicted temperatures patterns of the rotary kiln based on determined one or more temperature profiles and the mass flow rate which further enables identification of position of the one or more accretion clusters and the one or more reference clusters in the rotary kiln. In an embodiment, an accretion cluster refers to an area within the rotary kiln that is detected as affected by accretion. The accretion cluster is detected by comparing the thermal alteration observed with a low accretion condition (condition of the rotary kiln when it starts after a maintenance) of the rotary kiln. Further, a reference cluster refers to an area which shows no significant thermal difference in a low and high accretion condition of the kiln.

Finally, when the position of the one or more accretion clusters and the one or more reference clusters is available, the accretion localization module 222 identifies the position of the one or more accretion clusters and the one or more reference clusters in the rotary kiln as the accretion cluster information.

At step 308 of the present disclosure, the one or more hardware processors 206 of the system 102 compute an accretion score for the rotary kiln based, at least in part, on the accretion cluster information (obtained at step 306) and the pre-processed real-time data using the accretion scoring model. The accretion score represents real-time accretion condition of the rotary kiln. The working of the accretion scoring model is explained in detail with reference to FIG. 4.

Once the accretion score for the rotary kiln for the rotary kiln is available, the one or more hardware processors 206 of the system 102 display the accretion score on a user device, such as the user device 106.

FIG. 4, with reference to FIGS. 1-3, represents an exemplary flow diagram of a method 400 for computing the accretion score, in accordance with an embodiment of the present disclosure. The method 400 may use the system 102 of FIGS. 1 and 2 for execution. In an embodiment, the system 102 comprises one or more data storage devices or the memory 208 operatively coupled to the one or more hardware processors 206 and is configured to store instructions for execution of steps of the method 400 by the one or more hardware processors 206. The sequence of steps of the flow diagram may not be necessarily executed in the same order as they are presented. Further, one or more steps may be grouped together and performed in form of a single step, or one step may have several sub-steps that may be performed in parallel or in sequential manner.

At step 402 of the present disclosure, the accretion scoring module 224 present in the system 102 receives the pre-processed data from data pre-processing module 220 and the accretion cluster information from the accretion localization module 222.

At step 404 of the present disclosure, the system 102 estimates a heat transfer metrics (HTM) for each point of a plurality of points present in each of the reference cluster, and the accretion cluster based on the accretion cluster information and the pre-processed real-time data using the pre-trained thermal model comprised in the accretion localization module 222. The HTM comprises one or more of heat transfer coefficients, one or more temperature profiles of material, and concentration profiles of material. In an embodiment, the HTM may also comprise other metrics representative of the heat transfer across the accretion material, refractory and the external shell.

At step 406 of the present disclosure, the system 102 extracts statistics information associated with each point of the plurality of points present in each of the accretion cluster and the reference cluster based on the HTM estimated for a reference point. In particular, the system extracts a plurality of HTM statistics, such as a radial HTM, an axial HTM, and a bulk HTM based on the HTMs calculated for the accretion clusters. It should be noted that the plurality of statistics is predefined and can be configured based on the accretion history of the rotary kiln. The plurality of HTM statistics is designed to represent different aspects of the identified accretion clusters, such as overall distribution of accretion, radial expansion of accretion, axial expansion of accretion, tangential distribution of accretion and the like. Further, the plurality of HTM statistics help in enabling effective and accurate monitoring of the accretion without any sophisticated instrumentation.

In an embodiment, a low value in a HTM profile for the accretion cluster is considered as a representative of a point where there is maximum accretion in the radial direction. Further, the average of all the HTM values falling below first quantile can be used to capture the spread of the accretion in radial direction, which essentially blocks the flow and may cause back spillage of the process material.

$$HTM_1 = \sum(all\ HTM\ values\ below\ the\ first\ quartile\ within\ accretion\ cluster)$$

Alternatively, a minimum value of HTM profile within the accretion cluster itself can be used to represent the maximum radial extent of the accretion. Additionally, the accretion can be non-uniform around the rotary kiln. In that case, Kurtosis statistics is used that provide information about tail behavior of circumferential HTM profile. A heavier tail indicate more extreme values in circumferential HTM profile which further indicates the area in tangential direction more affected by accretion. Thus, Kurtosis can be used to define variation of accretion in different directions. As an example,

$$HTM_2 = \frac{Forth\ Central\ Moment\ of\ \text{Circumferential}\ HTM\ Profile}{Varience\ of\ \text{Circumferential}\ HTM\ Profile^2}$$

At step 408 of the present disclosure, the system 102 normalizes the plurality of HTM statistics associated with the one or more accretion clusters using the plurality of HTM statistics associated with the one or more reference clusters and the kiln operation data to obtain a plurality of normalized HTM statistics. In an embodiment, the normalization may include filtering of the operating conditions (such as identifying steady state operation of the rotary kiln) and scaling of HTM values using the HTM for reference clusters. It should be noted that the normalization enables defining a universal accretion score that is calculated in the next step.

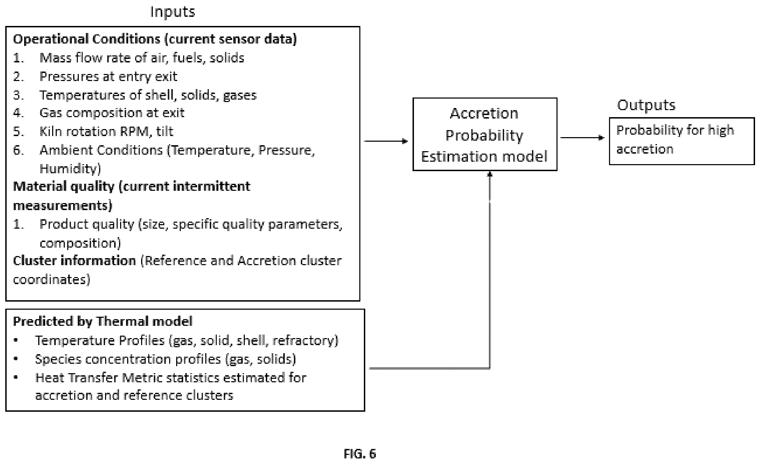

At step 410 of the present disclosure, the system 200 estimates an accretion probability score based on the plurality of normalized HTM statistics and the pre-processed real-time data using an accretion probability estimation model (shown with reference to FIG. 6). In an embodiment, without limiting the scope of the invention, the accretion probability estimation model can be a physics-assisted machine learning classification model. The accretion probability estimation model takes the kiln operation data, material quality, accretion cluster information from accretion localization module and outputs predicted by the thermal model as inputs. Then, based on the inputs, the accretion probability estimation model predicts a probability of accretion in real-time. The accretion probability score of close to '1' means very high chance of accretion and close to '0' means very low chances of accretion.

At step 412 of the present disclosure, the system 200 combines the accretion probability score and the plurality of normalized HTM statistics to obtain/estimate the accretion score for the rotary kiln. In an embodiment, the accretion score may comprise all the HTM statistics and the accretion probability as a set, such as accretion score = {HTM1, HTM2, probability}. In another embodiment, the accretion score is combination of the HTM statistics, and the accretion probability being converted into a single score using a mathematical function, such as a weighted sum of all the HTM statistics and the probability score, such as accretion score = w1*HTM1 + w2*HTM2 + w3*probability. It should be noted that the function can be configured and tuned as per the accretion history of the rotary kiln. Further, the accretion score represents a number indicating the accretion condition. For example, higher the accretion score, more severe the accretion. Each individual component of the accretion score, such as HTM1, HT2, .... probability provide a different aspect of the accretion.

The written description describes the subject matter herein to enable any person skilled in the art to make and use the embodiments. The scope of the subject matter embodiments is defined by the claims and may include other modifications that occur to those skilled in the art.

As discussed earlier, most critical problem faced by rotary kiln user is accretion that happens inside the rotary kiln. Available techniques require advanced sensors for monitoring kiln variables, such as temperature which further increase the cost of production. So, to overcome the disadvantages, embodiments of the present disclosure provide a method and a system for monitoring accretion in a rotary kiln. More specifically, the system and the method uses thermal model for determining plurality of HTM statistics, thereby enabling effective and accurate monitoring of the accretion without any sophisticated instrumentation. The system and the method determine accretion locations in the rotary kiln as well as the extent of accretion which further help in determining actionable inputs that can be provided to the user in form of operable actions, thereby ensuring increased kiln campaign life which further improves utilization of the rotary kiln.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of the invention being indicated by the following claims.

## Claims

1. A processor implemented method (300), comprising:

receiving, by an accretion monitoring system via one or more hardware processors, a real-time data associated with a rotary kiln, wherein the real-time data comprises one or more of: a kiln operation data, a material quality data, a kiln design data, a kiln maintenance data and a kiln ambient condition information (302);
pre-processing, by the accretion monitoring system via the one or more hardware processors, the real-time data using one or more pre-processing techniques to obtain a pre-processed real-time data (304), wherein the pre-processing comprises: synchronizing the real-time data coming from a plurality of sources at different frequencies, cleans the real-time data by removing outliers based on outlier removal model, augments the cleaned real-time data by imputation model and finally transforms the cleaned data based on a transformation model;

obtaining, by the accretion monitoring system via the one or more hardware processors, an accretion cluster information based on the pre-processed real-time data using an accretion localization model, wherein the accretion cluster information comprises position information of one or more reference clusters, and one or more accretion clusters present in the rotary kiln (306), wherein the step of obtaining, the accretion cluster information based on the pre-processed real-time data using the accretion localization model comprises:

determining, by the accretion monitoring system via the one or more hardware processors, one or more temperature profiles of solid and gas across length of the rotary kiln, and mass flow rate of material carried over upstream in the rotary kiln based on the kiln operation data, the material quality data, the kiln design data, and the kiln ambient condition information using a pre-trained thermal model comprised in the accretion localization model;
identifying, by the accretion monitoring system via the one or more hardware processors, position of the one or more accretion clusters and the one or more reference clusters present in the rotary kiln based on the determined one or more temperature profiles and the mass flow rate using a temperature tracking algorithm comprised in the accretion localization model, wherein the temperature tracking algorithm detects one or more alterations in measured and predicted temperatures patterns of the rotary kiln based on determined temperature profiles and the mass flow rate which further enables identification of position of the one or more accretion clusters and the one or more reference clusters in the rotary kiln; and
identifying, by the accretion monitoring system via the one or more hardware processors, the position of the one or more accretion clusters and the one or more reference clusters in the rotary kiln as the accretion cluster information;

computing, by the accretion monitoring system via the one or more hardware processors, an accretion score for the rotary kiln based, at least in part, on the accretion cluster information and the pre-processed real-time data using an accretion scoring model (308), wherein the accretion score represents a real-time accretion condition of the rotary kiln, wherein the step of computing the accretion score for the rotary kiln based on the accretion cluster information and the pre-processed real-time data using the accretion scoring model comprises:

estimating, by the accretion monitoring system via the one or more hardware processors, a heat transfer metrics (HTM) for each point of a plurality of points present in each of the one or more reference clusters, and the accretion cluster based on the accretion cluster information and the pre-processed real-time data using the pre-trained thermal model, wherein the HTM comprises one or more heat transfer coefficients, temperature profiles of material, and concentration profiles of material;

extracting, by the accretion monitoring system via the one or more hardware processors, statistics information associated with each point of the plurality of points present in each of the accretion cluster and the reference cluster based on the HTM estimated for a reference point, wherein the statistics information comprises a plurality of HTM statistics, and wherein the plurality of HTM statistics comprises a radial HTM, an axial HTM, and a bulk HTM;

normalizing, by the accretion monitoring system via the one or more hardware processors, the plurality of HTM statistics associated with the one or more accretion clusters using the plurality of HTM statistics associated with the one or more reference clusters and the kiln operation data to obtain a plurality of normalized HTM statistics;

estimating, by the accretion monitoring system via the one or more hardware processors, an accretion probability score based on the plurality of normalized HTM statistics and the pre-processed real-time data using an accretion probability estimation model; and

combining, by the accretion monitoring system via the one or more hardware processors, the accretion probability score and the plurality of normalized HTM statistics to obtain the accretion score for the rotary kiln;

identifying, by the accretion monitoring system via the one or more hardware processors, one or more operable actions to be recommended to a user based on the accretion score using a predefined action recommendation technique; and

displaying, by the accretion monitoring system via the one or more hardware processors, the one or more operable actions on the user device or directly executing the one or more operable actions via Distributed Control System (DCS), wherein the one or more operable actions comprises one or more of rescheduling of maintenance of the rotary kiln, change in design of the rotary kiln, raw material used in the rotary kiln, and change in operation of the rotary kiln.

2. An accretion monitoring system (102), comprising:

a memory (208) storing instructions;
one or more communication interfaces (210); and
one or more hardware processors (206) coupled to the memory (208) via the one or more communication interfaces (210), wherein the one or more hardware processors (206) are configured by the instructions to:

receive a real-time data associated with a rotary kiln, wherein the real-time data comprises one or more of: a kiln operation data, a material quality data, a kiln design data, a kiln maintenance data and a kiln ambient condition information;
pre-process the real-time data using one or more pre-processing techniques to obtain a pre-processed real-time data, wherein the pre-processing comprises: synchronizing the real-time data coming from a plurality of sources at different frequencies, cleans the real-time data by removing outliers based on outlier removal model, augments the cleaned real-time data by imputation model and finally transforms the cleaned data based on a transformation model;

obtain an accretion cluster information based on the pre-processed real-time data using an accretion localization model, wherein the accretion cluster information comprises position information of one or more reference clusters, and one or more accretion clusters present in the rotary kiln, wherein the step of obtaining, the accretion cluster information based on the pre-processed real-time data using the accretion localization model comprises:

determining, by the accretion monitoring system via the one or more hardware processors, one or more temperature profiles of solid and gas across length of the rotary kiln, and mass flow rate of material carried over upstream in the rotary kiln based on the kiln operation data, the material quality data, the kiln design data, and the kiln ambient condition information using a pre-trained thermal model comprised in the accretion localization model;
identifying, by the accretion monitoring system via the one or more hardware processors, position of the one or more accretion clusters and the one or more reference clusters present in the rotary kiln based on the determined one or more temperature profiles and the mass flow rate using a temperature tracking algorithm comprised in the accretion localization model, wherein the temperature tracking algorithm detects one or more alterations in measured and predicted temperatures patterns of the rotary kiln based on determined temperature profiles and the mass flow rate which further enables identification of position of the one or more accretion clusters and the one or more reference clusters in the rotary kiln; and

identifying, by the accretion monitoring system via the one or more hardware processors, the position of the one or more accretion clusters and the one or more reference clusters in the rotary kiln as the accretion cluster information;

compute an accretion score for the rotary kiln based, at least in part, on the accretion cluster information and the pre-processed real-time data using an accretion scoring model, wherein the accretion score represents a real-time accretion condition of the rotary kiln, wherein the step of computing the accretion score for the rotary kiln based, at least in part, on the accretion cluster information and the pre-processed real-time data using the accretion scoring model comprises:

estimating, by the accretion monitoring system via the one or more hardware processors, a heat transfer metrics (HTM) for each point of a plurality of points present in each of the one or more reference clusters, and the accretion cluster based on the accretion cluster information and the pre-processed real-time data using the pre-trained thermal model, wherein the HTM comprises one or more heat transfer coefficients, temperature profiles of material, and concentration profiles of material;

extracting, by the accretion monitoring system via the one or more hardware processors, statistics information associated with each point of the plurality of points present in each of the accretion cluster and the reference cluster based on the HTM estimated for a reference point, wherein the statistics information comprises a plurality of HTM statistics, and wherein the plurality of HTM statistics comprises a radial HTM, an axial HTM, and a bulk HTM;

normalizing, by the accretion monitoring system via the one or more hardware processors, the plurality of HTM statistics associated with the one or more accretion clusters using the plurality of HTM statistics associated with the one or more reference clusters and the kiln operation data to obtain a plurality of normalized HTM statistics;

estimating, by the accretion monitoring system via the one or more hardware processors, an accretion probability score based on the plurality of normalized HTM statistics and the pre-processed real-time data using an accretion probability estimation model; and

combining, by the accretion monitoring system via the one or more hardware processors, the accretion probability score and the plurality of normalized HTM statistics to obtain the accretion score for the rotary kiln;

identify, by the accretion monitoring system, one or more operable actions to be recommended to a user based on the accretion score using a predefined action recommendation technique; and

display, by the accretion monitoring system, the one or more operable actions on the user device or directly executing the one or more operable actions via Distributed Control System (DCS), wherein the one or more operable actions comprises one or more of rescheduling of maintenance of the rotary kiln, change in design of the rotary kiln, raw material used in the rotary kiln, and change in operation of the rotary kiln.

3. One or more non-transitory machine-readable information storage mediums comprising one or more instructions which when executed by one or more hardware processors cause:

receiving, by an accretion monitoring system, a real-time data associated with a rotary kiln, wherein the real-time data comprises one or more of: a kiln operation data, a material quality data, a kiln design data, a kiln maintenance data and a kiln ambient condition information;

pre-processing, by the accretion monitoring system, the real-time data using one or more pre-processing techniques to obtain a pre-processed real-time data, wherein the pre-processing comprises: synchronizing the real-time data coming from a plurality of sources at different frequencies, cleans the real-time data by removing outliers based on outlier removal model, augments the cleaned real-time data by imputation model and finally transforms the cleaned data based on a transformation model;

obtaining, by the accretion monitoring system, an accretion cluster information based on the pre-processed real-time data using an accretion localization model, wherein the accretion cluster information comprises position information of one or more reference clusters, and one or more accretion clusters present in the rotary kiln, wherein the step of obtaining, the accretion cluster information based on the pre-processed real-time data using the accretion localization model comprises:

determining, by the accretion monitoring system via the one or more hardware processors, one or more temperature profiles of solid and gas across length of the rotary kiln, and mass flow rate of material carried over upstream in the rotary kiln based on the kiln operation data, the material quality data, the kiln design data, and the kiln ambient condition information using a pre-trained thermal model comprised in the accretion localization model;

identifying, by the accretion monitoring system via the one or more hardware processors, position of the one or more accretion clusters and the one or more reference clusters present in the rotary kiln based on the determined one or more temperature profiles and the mass flow rate using a temperature tracking algorithm comprised in the accretion localization model, wherein the temperature tracking algorithm detects one or more alterations in measured and predicted temperatures patterns of the rotary kiln based on determined temperature profiles and the mass flow rate which further enables identification of position of the one or more accretion clusters and the one or more reference clusters in the rotary kiln; and

identifying, by the accretion monitoring system via the one or more hardware processors, the position of the one or more accretion clusters and the one or more reference clusters in the rotary kiln as the accretion cluster information;

computing, by the accretion monitoring system, an accretion score for the rotary kiln based, at least in part, on the accretion cluster information and the pre-processed real-time data using an accretion scoring model, wherein the accretion score represents a real-time accretion condition of the rotary kiln, wherein the step of computing the accretion score for the rotary kiln based, at least in part, on the accretion cluster information and the pre-processed real-time data using the accretion scoring model comprises:

estimating, by the accretion monitoring system via the one or more hardware processors, a heat transfer metrics (HTM) for each point of a plurality of points present in each of the one or more reference clusters, and the accretion cluster based on the accretion cluster information and the pre-processed real-time data using the pre-trained thermal model, wherein the HTM comprises one or more heat transfer coefficients, temperature profiles of material, and concentration profiles of material;

extracting, by the accretion monitoring system via the one or more hardware processors, statistics information associated with each point of the plurality of points present in each of the accretion cluster and the reference cluster based on the HTM estimated for a reference point, wherein the statistics information comprises a plurality of HTM statistics, and wherein the plurality of HTM statistics comprises a radial HTM, an axial HTM, and a bulk HTM;

normalizing, by the accretion monitoring system via the one or more hardware processors, the plurality of HTM statistics associated with the one or more accretion clusters using the plurality of HTM statistics associated with the one or more reference clusters and the kiln operation data to obtain a plurality of normalized HTM statistics;

estimating, by the accretion monitoring system via the one or more hardware processors, an accretion probability score based on the plurality of normalized HTM statistics and the pre-processed real-time data using an accretion probability estimation model; and

combining, by the accretion monitoring system via the one or more hardware processors, the accretion probability score and the plurality of normalized HTM statistics to obtain the accretion score for the rotary kiln;

identifying, by the accretion monitoring system, one or more operable actions to be recommended to a user based on the accretion score using a predefined action recommendation technique; and

displaying, by the accretion monitoring system, the one or more operable actions on the user device or directly executing the one or more operable actions via Distributed Control System (DCS), wherein the one or more operable actions comprises one or more of rescheduling of maintenance of the rotary kiln, change in design of the rotary kiln, raw material used in the rotary kiln, and change in operation of the rotary kiln.

**Patentansprüche**

1. Prozessorimplementiertes Verfahren (300), umfassend:

Empfangen, durch ein Ansatzüberwachungssystem über einen oder mehrere Hardwareprozessoren, von Echtzeitdaten, die mit einem Drehrohrofen assoziiert sind, wobei die Echtzeitdaten eines oder mehrere von Folgendem umfassen: Ofenbetriebsdaten, Materialqualitätsdaten, Ofenentwurfsdaten, Ofenwartungsdaten und Ofenumgebungsbedingungsinformationen (302);

Vorverarbeiten, durch das Ansatzüberwachungssystem über den einen oder die mehreren Hardwareprozessoren, der Echtzeitdaten unter Verwendung einer oder mehrerer Vorverarbeitungstechniken, um vorverarbeitete Echtzeitdaten (304) zu erhalten, wobei das Vorverarbeiten Folgendes umfasst: Synchronisieren der Echtzeitdaten, die von einer Mehrzahl von Quellen kommen, mit unterschiedlichen Frequenzen, Reinigen der Echtzeitdaten durch Entfernen von Ausreißern basierend auf einem Ausreißerentfernungsmodell, Erweitern der gereinigten Echtzeitdaten durch ein Imputationsmodell und schließlich Transformieren der gereinigten Daten basierend auf einem Transformationsmodell;

Erhalten, durch das Ansatzüberwachungssystem über den einen oder die mehreren Hardwareprozessoren, von Ansatzclusterinformationen basierend auf den vorverarbeiteten Echtzeitdaten unter Verwendung eines Ansatzlokalisierungsmodells, wobei die Ansatzclusterinformationen Positionsinformationen von einem oder mehreren Referenzclustern und einem oder mehreren Ansatzclustern, die in dem Drehrohrofen (306) vorhanden sind, umfassen, wobei der Schritt des Erhaltens der Ansatzclusterinformationen basierend auf den vorverarbeiteten Echtzeitdaten unter Verwendung des Ansatzlokalisierungsmodells Folgendes umfasst:

Bestimmen, durch das Ansatzüberwachungssystem über den einen oder die mehreren Hardwareprozessoren, eines oder mehrerer Temperaturprofile von Feststoff und Gas über die Länge des Drehrohrofens und einer Massenflussrate von Material, das stromaufwärts in dem Drehrohrofen getragen wird, basierend auf den Ofenbetriebsdaten, den Materialqualitätsdaten, den Ofenentwurfsdaten und den Ofenumgebungsbedingungsinformationen unter Verwendung eines vortrainierten thermischen Modells, das in dem Ansatzlokalisierungsmodell enthalten ist;

Identifizieren, durch das Ansatzüberwachungssystem über den einen oder die mehreren Hardwareprozessoren, einer Position des einen oder der mehreren Ansatzcluster und des einen oder der mehreren Referenzcluster, die in dem Drehrohrofen vorhanden sind, basierend auf dem bestimmten einen oder den bestimmten mehreren Temperaturprofilen und der Massenflussrate unter Verwendung eines Temperaturverfolgungsalgorithmus, der in dem Ansatzlokalisierungsmodell enthalten ist, wobei der Temperaturverfolgungsalgorithmus eine oder mehrere Veränderungen in gemessenen und vorhergesagten Temperaturmustern des Drehrohrofens basierend auf bestimmten Temperaturprofilen und der Massenflussrate detektiert, was ferner eine Identifikation einer Position des einen oder der mehreren Ansatzcluster und des einen oder der mehreren Referenzcluster in dem Drehrohrofen ermöglicht; und

Identifizieren, durch das Ansatzüberwachungssystem über den einen oder die mehreren Hardwareprozessoren, der Position des einen oder der mehreren Ansatzcluster und des einen oder der mehreren Referenzcluster in dem Drehrohrofen als die Ansatzclusterinformationen;

Berechnen, durch das Ansatzüberwachungssystem über den einen oder die mehreren Hardwareprozessoren, einer Ansatzbewertung für den Drehrohrofen basierend, zumindest teilweise, auf den Ansatzclusterinformationen und den vorverarbeiteten Echtzeitdaten unter Verwendung eines Ansatzbewertungsmodells (308), wobei die Ansatzbewertung eine Echtzeitansatzbedingung des Drehrohrofens darstellt, wobei der Schritt des Berechnens der Ansatzbewertung für den Drehrohrofen basierend auf den Ansatzclusterinformationen und den vorverarbeiteten Echtzeitdaten unter Verwendung des Ansatzbewertungsmodells Folgendes umfasst:

Schätzen, durch das Ansatzüberwachungssystem über den einen oder die mehreren Hardwareprozessoren, einer Wärmeübertragungsmetrik (Heat Transfer Metrics, HTM) für jeden Punkt einer Mehrzahl von Punkten, die in jedem des einen oder der mehreren Referenzcluster vorhanden sind, und des Ansatzclusters basierend auf den Ansatzclusterinformationen und den vorverarbeiteten Echtzeitdaten unter Verwendung des vortrainierten thermischen Modells, wobei die HTM einen oder mehrere Wärmeübertragungskoeffizienten, Temperaturprofile von Material und Konzentrationsprofile von Material umfasst;

Extrahieren, durch das Ansatzüberwachungssystem über den einen oder die mehreren Hardwareprozessoren, von Statistikinformationen, die jedem Punkt der Mehrzahl von Punkten zugeordnet sind, die in jedem des Ansatzclusters und des Referenzclusters vorhanden sind, basierend auf der HTM, die für einen Referenzpunkt geschätzt wird, wobei die Statistikinformationen eine Mehrzahl von HTM-Statistiken umfassen und wobei die Mehrzahl von HTM-Statistiken eine radiale HTM, eine axiale HTM und eine Bulk-HTM umfasst;

Normalisieren, durch das Ansatzüberwachungssystem über den einen oder die mehreren Hardwareprozessoren, der Mehrzahl von HTM-Statistiken, die dem einen oder den mehreren Ansatzclustern zugeordnet sind, unter Verwendung der Mehrzahl von HTM-Statistiken, die dem einen oder den mehreren Referenzclustern zugeordnet sind, und der Ofenbetriebsdaten, um eine Mehrzahl von normalisierten HTM-Statistiken zu erhalten;

Schätzen, durch das Ansatzüberwachungssystem über den einen oder die mehreren Hardwareprozessoren, einer Ansatzwahrscheinlichkeitsbewertung basierend auf der Mehrzahl von normalisierten HTM-Statistiken und den vorverarbeiteten Echtzeitdaten unter Verwendung eines Ansatzwahrscheinlichkeitsschätzmodells; und

Kombinieren, durch das Ansatzüberwachungssystem über den einen oder die mehreren Hardwareprozessoren, der Ansatzwahrscheinlichkeitsbewertung und der Mehrzahl von normalisierten HTM-Statistiken, um die Ansatzbewertung für den Drehrohrofen zu erhalten;

Identifizieren, durch das Ansatzüberwachungssystem über den einen oder die mehreren Hardwareprozessoren, einer oder mehrerer bedienbarer Aktionen, die einem Benutzer empfohlen werden sollen, basierend auf der Ansatzbewertung unter Verwendung einer vordefinierten Aktionsempfehlungstechnik; und

Anzeigen, durch das Ansatzüberwachungssystem über den einen oder die mehreren Hardwareprozessoren, der einen oder der mehreren bedienbaren Aktionen auf der Benutzervorrichtung oder direktes Ausführen der einen oder der mehreren bedienbaren Aktionen über ein verteiltes Steuersystem (Distributed Control System, DCS), wobei die eine oder die mehreren bedienbaren Aktionen eines oder mehrere von Neuplanung der Wartung des Drehrohrofens, Änderung des Entwurfs des Drehrohrofens, Rohmaterial, das in dem Drehrohrofen verwendet wird, und Änderung des Betriebs des Drehrohrofens umfassen.

2.  Ansatzüberwachungssystem (102), umfassend:

einen Speicher (208), der Anweisungen speichert;
eine oder mehrere Kommunikationsschnittstellen (210); und
einen oder mehrere Hardwareprozessoren (206), die mit dem Speicher (208) über die eine oder die mehreren Kommunikationsschnittstellen (210) gekoppelt sind, wobei der eine oder die mehreren Hardwareprozessoren (206) durch die Anweisungen konfiguriert sind zum:

Empfangen von Echtzeitdaten, die mit einem Drehrohrofen assoziiert sind, wobei die Echtzeitdaten eines oder mehrere von Folgendem umfassen: Ofenbetriebsdaten, Materialqualitätsdaten, Ofenentwurfsdaten, Ofenwartungsdaten und Ofenumgebungsbedingungsinformationen;
Vorverarbeiten der Echtzeitdaten unter Verwendung einer oder mehrerer Vorverarbeitungstechniken, um vorverarbeitete Echtzeitdaten zu erhalten, wobei das Vorverarbeiten Folgendes umfasst: Synchronisieren der Echtzeitdaten, die von einer Mehrzahl von Quellen kommen, mit unterschiedlichen Frequenzen, Reinigen der Echtzeitdaten durch Entfernen von Ausreißern basierend auf einem Ausreißerentfernungsmodell, Erweitern der gereinigten Echtzeitdaten durch ein Imputationsmodell und schließlich Transformieren der gereinigten Daten basierend auf einem Transformationsmodell;

Erhalten von Ansatzclusterinformationen basierend auf den vorverarbeiteten Echtzeitdaten unter Verwendung eines Ansatzlokalisierungsmodells, wobei die Ansatzclusterinformationen Positionsinformationen von einem oder mehreren Referenzclustern und einem oder mehreren Ansatzclustern, die in dem Drehrohrofen vorhanden sind, umfassen, wobei der Schritt des Erhaltens der Ansatzclusterinformationen basierend auf den vorverarbeiteten Echtzeitdaten unter Verwendung des Ansatzlokalisierungsmodells Folgendes umfasst:

Bestimmen, durch das Ansatzüberwachungssystem über den einen oder die mehreren Hardwareprozessoren, eines oder mehrerer Temperaturprofile von Feststoff und Gas über die Länge des Drehrohrofens und einer Massenflussrate von Material, das stromaufwärts in dem Drehrohrofen getragen wird, basierend auf den Ofenbetriebsdaten, den Materialqualitätsdaten, den Ofenentwurfsdaten und den Ofenumgebungsbedingungsinformationen unter Verwendung eines vortrainierten thermischen Modells, das in dem Ansatzlokalisierungsmodell enthalten ist;

Identifizieren, durch das Ansatzüberwachungssystem über den einen oder die mehreren Hardwareprozessoren, einer Position des einen oder der mehreren Ansatzcluster und des einen oder der mehreren Referenzcluster, die in dem Drehrohrofen vorhanden sind, basierend auf dem bestimmten einen oder den bestimmten mehreren Temperaturprofilen und der Massenflussrate unter Verwendung eines Temperaturverfolgungsalgorithmus, der in dem Ansatzlokalisierungsmodell enthalten ist, wobei der Temperaturverfolgungsalgorithmus eine oder mehrere Veränderungen in gemessenen und vorhergesagten Temperaturmustern des Drehrohrofens basierend auf bestimmten Temperaturprofilen und der Massenflussrate detektiert, was ferner eine Identifikation einer Position des einen oder der mehreren Ansatzcluster und des einen oder der mehreren Referenzcluster in dem Drehrohrofen ermöglicht; und

Identifizieren, durch das Ansatzüberwachungssystem über den einen oder die mehreren Hardwareprozessoren, der Position des einen oder der mehreren Ansatzcluster und des einen oder der mehreren Referenzcluster in dem Drehrohrofen als die Ansatzclusterinformationen;

Berechnen einer Ansatzbewertung für den Drehrohrofen basierend, zumindest teilweise, auf den Ansatzclusterinformationen und den vorverarbeiteten Echtzeitdaten unter Verwendung eines Ansatzbewertungsmodells, wobei die Ansatzbewertung eine Echtzeitansatzbedingung des Drehrohrofens darstellt, wobei der Schritt des Berechnens der Ansatzbewertung für den Drehrohrofen basierend, zumindest teilweise, auf den Ansatzclusterinformationen und den vorverarbeiteten Echtzeitdaten unter Verwendung des Ansatzbewertungsmodells Folgendes umfasst:

Schätzen, durch das Ansatzüberwachungssystem über den einen oder die mehreren Hardwareprozessoren, einer Wärmeübertragungsmetrik (Heat Transfer Metrics, HTM) für jeden Punkt einer Mehrzahl von Punkten, die in jedem des einen oder der mehreren Referenzcluster vorhanden sind, und des Ansatzclusters basierend auf den Ansatzclusterinformationen und den vorverarbeiteten Echtzeitdaten unter Verwendung des vortrainierten thermischen Modells, wobei die HTM einen oder mehrere Wärmeübertragungskoeffizienten, Temperaturprofile von Material und Konzentrationsprofile von Material umfasst;

Extrahieren, durch das Ansatzüberwachungssystem über den einen oder die mehreren Hardwareprozessoren, von Statistikinformationen, die jedem Punkt der Mehrzahl von Punkten zugeordnet sind, die in jedem des Ansatzclusters und des Referenzclusters vorhanden sind, basierend auf der HTM, die für einen Referenzpunkt geschätzt wird, wobei die Statistikinformationen eine Mehrzahl von HTM-Statistiken umfassen und wobei die Mehrzahl von HTM-Statistiken eine radiale HTM, eine axiale HTM und eine Bulk-HTM umfasst;

Normalisieren, durch das Ansatzüberwachungssystem über den einen oder die mehreren Hardwareprozessoren, der Mehrzahl von HTM-Statistiken, die dem einen oder den mehreren Ansatzclustern zugeordnet sind, unter Verwendung der Mehrzahl von HTM-Statistiken, die dem einen oder den mehreren Referenzclustern zugeordnet sind, und der Ofenbetriebsdaten, um eine Mehrzahl von normalisierten HTM-Statistiken zu erhalten;

Schätzen, durch das Ansatzüberwachungssystem über den einen oder die mehreren Hardwareprozessoren, einer Ansatzwahrscheinlichkeitsbewertung basierend auf der Mehrzahl von normalisierten HTM-Statistiken und den vorverarbeiteten Echtzeitdaten unter Verwendung eines Ansatzwahrscheinlichkeitsschätzmodells; und

Kombinieren, durch das Ansatzüberwachungssystem über den einen oder die mehreren Hardwareprozessoren, der Ansatzwahrscheinlichkeitsbewertung und der Mehrzahl von normalisierten HTM-Statistiken, um die Ansatzbewertung für den Drehrohrofen zu erhalten;

Identifizieren, durch das Ansatzüberwachungssystem, einer oder mehrerer bedienbarer Aktionen, die einem Benutzer empfohlen werden sollen, basierend auf der Ansatzbewertung unter Verwendung einer vordefinierten Aktionsempfehlungstechnik; und

Anzeigen, durch das Ansatzüberwachungssystem, der einen oder der mehreren bedienbaren Aktionen auf der Benutzervorrichtung oder direktes Ausführen der einen oder der mehreren bedienbaren Aktionen über ein verteiltes Steuersystem (Distributed Control System, DCS), wobei die eine oder die mehreren bedienbaren Aktionen eines oder mehrere von Neuplanung der Wartung des Drehrohrofens, Änderung des Entwurfs des Drehrohrofens, Rohmaterial, das in dem Drehrohrofen verwendet wird, und Änderung des Betriebs des Drehrohrofens umfassen.

3. Ein oder mehrere nichtflüchtige maschinenlesbare Informationsspeichermedien, umfassend eine oder mehrere Anweisungen, die bei Ausführung durch einen oder mehrere Hardwareprozessoren Folgendes bewirken:

Empfangen, durch ein Ansatzüberwachungssystem, von Echtzeitdaten, die mit einem Drehrohrofen assoziiert sind, wobei die Echtzeitdaten eines oder mehrere von Folgendem umfassen: Ofenbetriebsdaten, Materialqualitätsdaten, Ofenentwurfsdaten, Ofenwartungsdaten und Ofenumgebungsbedingungsinformationen; Vorverarbeiten, durch das Ansatzüberwachungssystem, der Echtzeitdaten unter Verwendung einer oder mehrerer Vorverarbeitungstechniken, um vorverarbeitete Echtzeitdaten zu erhalten, wobei das Vorverarbeiten Folgendes umfasst: Synchronisieren der Echtzeitdaten, die von einer Mehrzahl von Quellen kommen, mit unterschiedlichen Frequenzen, Reinigen der Echtzeitdaten durch Entfernen von Ausreißern basierend auf einem Ausreißerentfernungsmodell, Erweitern der gereinigten Echtzeitdaten durch ein Imputationsmodell und schließlich Transformieren der gereinigten Daten basierend auf einem Transformationsmodell;

Erhalten, durch das Ansatzüberwachungssystem, von Ansatzclusterinformationen basierend auf den vorverarbeiteten Echtzeitdaten unter Verwendung eines Ansatzlokalisierungsmodells, wobei die Ansatzclusterinformationen Positionsinformationen von einem oder mehreren Referenzclustern und einem oder mehreren Ansatzclustern, die in dem Drehrohrofen vorhanden sind, umfassen, wobei der Schritt des Erhaltens der Ansatzclusterinformationen basierend auf den vorverarbeiteten Echtzeitdaten unter Verwendung des Ansatzlokalisierungsmodells Folgendes umfasst:

Bestimmen, durch das Ansatzüberwachungssystem über den einen oder die mehreren Hardwareprozessoren, eines oder mehrerer Temperaturprofile von Feststoff und Gas über die Länge des Drehrohrofens und einer Massenflussrate von Material, das stromaufwärts in dem Drehrohrofen getragen wird, basierend auf den Ofenbetriebsdaten, den Materialqualitätsdaten, den Ofenentwurfsdaten und den Ofenumgebungsbedingungsinformationen unter Verwendung eines vortrainierten thermischen Modells, das in dem Ansatzlokalisierungsmodell enthalten ist; Identifizieren, durch das Ansatzüberwachungssystem über den einen oder die mehreren Hardwareprozessoren, einer Position des einen oder der mehreren Ansatzcluster und des einen oder der mehreren Referenzcluster, die in dem Drehrohrofen vorhanden sind, basierend auf dem bestimmten einen oder den bestimmten mehreren Temperaturprofilen und der Massenflussrate unter Verwendung eines Temperaturverfolgungsalgorithmus, der in dem Ansatzlokalisierungsmodell enthalten ist, wobei der Temperaturverfolgungsalgorithmus eine oder mehrere Veränderungen in gemessenen und vorhergesagten Temperaturmustern des Drehrohrofens basierend auf bestimmten Temperaturprofilen und der Massenflussrate detektiert, was ferner eine Identifikation einer Position des einen oder der mehreren Ansatzcluster und des einen oder der mehreren Referenzcluster in dem Drehrohrofen ermöglicht; und Identifizieren, durch das Ansatzüberwachungssystem über den einen oder die mehreren Hardwareprozessoren, der Position des einen oder der mehreren Ansatzcluster und des einen oder der mehreren Referenzcluster in dem Drehrohrofen als die Ansatzclusterinformationen;

Berechnen, durch das Ansatzüberwachungssystem, einer Ansatzbewertung für den Drehrohrofen basierend, zumindest teilweise, auf den Ansatzclusterinformationen und den vorverarbeiteten Echtzeitdaten unter Verwendung eines Ansatzbewertungsmodells, wobei die Ansatzbewertung eine Echtzeitansatzbedingung des Drehrohrofens darstellt, wobei der Schritt des Berechnens der Ansatzbewertung für den Drehrohrofen basierend, zumindest teilweise, auf den Ansatzclusterinformationen und den vorverarbeiteten Echtzeitdaten unter Verwendung des Ansatzbewertungsmodells Folgendes umfasst:

Schätzen, durch das Ansatzüberwachungssystem über den einen oder die mehreren Hardwareprozessoren, einer Wärmeübertragungsmetrik (Heat Transfer Metrics, HTM) für jeden Punkt einer Mehrzahl von Punkten, die in jedem des einen oder der mehreren Referenzcluster vorhanden sind, und des Ansatzclusters basierend auf den Ansatzclusterinformationen und den vorverarbeiteten Echtzeitdaten unter Verwendung des vortrainierten thermischen Modells, wobei die HTM einen oder mehrere Wärmeübertragungskoeffizienten, Temperaturprofile von Material und Konzentrationsprofile von Material umfasst; Extrahieren, durch das Ansatzüberwachungssystem über den einen oder die mehreren Hardwareprozessoren, von Statistikinformationen, die jedem Punkt der Mehrzahl von Punkten zugeordnet sind, die in jedem des Ansatzclusters und des Referenzclusters vorhanden sind, basierend auf der HTM, die für einen Referenzpunkt geschätzt wird, wobei die Statistikinformationen eine Mehrzahl von HTM-Statistiken umfassen und wobei die Mehrzahl von HTM-Statistiken eine radiale HTM, eine axiale HTM und eine Bulk-HTM umfasst;

Normalisieren, durch das Ansatzüberwachungssystem über den einen oder die mehreren Hardwareprozessoren, der Mehrzahl von HTM-Statistiken, die dem einen oder den mehreren Ansatzclustern zugeordnet sind, unter Verwendung der Mehrzahl von HTM-Statistiken, die dem einen oder den mehreren Referenzclustern zugeordnet sind, und der Ofenbetriebsdaten, um eine Mehrzahl von normalisierten HTM-Statistiken zu erhalten;

Schätzen, durch das Ansatzüberwachungssystem über den einen oder die mehreren Hardwareprozessoren, einer Ansatzwahrscheinlichkeitsbewertung basierend auf der Mehrzahl von normalisierten HTM-Statistiken und den vorverarbeiteten Echtzeitdaten unter Verwendung eines Ansatzwahrscheinlichkeitsschätzmodells; und

Kombinieren, durch das Ansatzüberwachungssystem über den einen oder die mehreren Hardwareprozessoren, der Ansatzwahrscheinlichkeitsbewertung und der Mehrzahl von normalisierten HTM-Statistiken, um die Ansatzbewertung für den Drehrohrofen zu erhalten;

Identifizieren, durch das Ansatzüberwachungssystem, einer oder mehrerer bedienbarer Aktionen, die einem Benutzer empfohlen werden sollen, basierend auf der Ansatzbewertung unter Verwendung einer vordefinierten Aktionsempfehlungstechnik; und

Anzeigen, durch das Ansatzüberwachungssystem, der einen oder der mehreren bedienbaren Aktionen auf der Benutzervorrichtung oder direktes Ausführen der einen oder der mehreren bedienbaren Aktionen über ein verteiltes Steuersystem (Distributed Control System, DCS), wobei die eine oder die mehreren bedienbaren Aktionen eines oder mehrere von Neuplanung der Wartung des Drehrohrofens, Änderung des Entwurfs des Drehrohrofens, Rohmaterial, das in dem Drehrohrofen verwendet wird, und Änderung des Betriebs des Drehrohrofens umfassen.

**Revendications**

1. Procédé mis en œuvre par processeur (300), comprenant :

la réception, par un système de surveillance d'accrétion via un ou plusieurs processeurs matériels, de données en temps réel associées à un four rotatif, dans lequel les données en temps réel comprennent une ou plusieurs parmi : des données de fonctionnement de four, des données de qualité de matériau, des données de conception de four, des données de maintenance de four et des informations de condition ambiante de four (302) ;

le prétraitement, par le système de surveillance d'accrétion via les un ou plusieurs processeurs matériels, des données en temps réel en utilisant une ou plusieurs techniques de prétraitement pour obtenir des données en temps réel prétraitées (304), dans lequel le prétraitement comprend : la synchronisation des données en temps réel provenant d'une pluralité de sources à différentes fréquences, le nettoyage des données en temps réel en supprimant les valeurs aberrantes sur la base d'un modèle de suppression de valeurs aberrantes, l'augmentation des données en temps réel nettoyées par un modèle d'imputation et enfin la transformation des données nettoyées sur la base d'un modèle de transformation ;

l'obtention, par le système de surveillance d'accrétion via les un ou plusieurs processeurs matériels, d'informations de groupe d'accrétion sur la base des données en temps réel prétraitées en utilisant un modèle de localisation d'accrétion, dans lequel les informations de groupe d'accrétion comprennent des informations de position d'un ou plusieurs groupes de référence, et un ou plusieurs groupes d'accrétion présents dans le four rotatif (306), dans lequel l'étape d'obtention des informations de groupe d'accrétion sur la base des données en temps réel prétraitées en utilisant le modèle de localisation d'accrétion comprend :

la détermination, par le système de surveillance d'accrétion via les un ou plusieurs processeurs matériels, d'un ou plusieurs profils de température de solide et de gaz sur toute la longueur du four rotatif, et d'un débit massique de matériau transporté en amont dans le four rotatif sur la base des données de fonctionnement de four, des données de qualité de matériau, des données de conception de four, et des informations de condition ambiante de four en utilisant un modèle thermique pré-entraîné compris dans le modèle de localisation d'accrétion ;

l'identification, par le système de surveillance d'accrétion via les un ou plusieurs processeurs matériels, de la position des un ou plusieurs groupes d'accrétion et des un ou plusieurs groupes de référence présents dans le four rotatif sur la base des un ou plusieurs profils de température déterminés et du débit massique en utilisant un algorithme de suivi de température compris dans le modèle de localisation d'accrétion, dans lequel l'algorithme de suivi de température détecte une ou plusieurs modifications dans des modèles de température mesurés et prédits du four rotatif sur la base de profils de température déterminés et du débit massique qui permet en outre l'identification de la position des un ou plusieurs groupes d'accrétion et des un ou plusieurs groupes de référence dans le four rotatif ; et l'identification, par le système de surveillance d'accrétion via les un ou plusieurs processeurs matériels, de la position des un ou plusieurs groupes d'accrétion et des un ou plusieurs groupes de référence dans le four rotatif en tant qu'informations de groupe d'accrétion ;

le calcul, par le système de surveillance d'accrétion via les un ou plusieurs processeurs matériels, d'un score d'accrétion pour le four rotatif sur la base, au moins en partie, des informations de groupe d'accrétion et des données en temps réel prétraitées en utilisant un modèle de notation d'accrétion (308), dans lequel le score d'accrétion représente une condition d'accrétion en temps réel du four rotatif, dans lequel l'étape de calcul du score d'accrétion pour le four rotatif sur la base des informations de groupe d'accrétion et des données en temps réel prétraitées en utilisant le modèle de notation d'accrétion comprend :

l'estimation, par le système de surveillance d'accrétion via les un ou plusieurs processeurs matériels, d'une métrique de transfert de chaleur (HTM) pour chaque point d'une pluralité de points présents dans chacun des un ou plusieurs groupes de référence, et du groupe d'accrétion sur la base des informations de groupe d'accrétion et des données en temps réel prétraitées en utilisant le modèle thermique pré-entraîné, dans lequel la HTM comprend un ou plusieurs coefficients de transfert de chaleur, profils de température de matériau, et profils de concentration de matériau ;
l'extraction, par le système de surveillance d'accrétion via les un ou plusieurs processeurs matériels, d'informations statistiques associées à chaque point de la pluralité de points présents dans chacun du groupe d'accrétion et du groupe de référence sur la base de la HTM estimée pour un point de référence, dans lequel les informations statistiques comprennent une pluralité de statistiques de HTM, et dans lequel la pluralité de statistiques de HTM comprend une HTM radiale, une HTM axiale, et une HTM globale ;
la normalisation, par le système de surveillance d'accrétion via les un ou plusieurs processeurs matériels, de la pluralité de statistiques de HTM associées aux un ou plusieurs groupes d'accrétion en utilisant la pluralité de statistiques de HTM associées aux un ou plusieurs groupes de référence et les données de fonctionnement de four pour obtenir une pluralité de statistiques de HTM normalisées ;
l'estimation, par le système de surveillance d'accrétion via les un ou plusieurs processeurs matériels, d'un score de probabilité d'accrétion sur la base de la pluralité de statistiques de HTM normalisées et des données en temps réel prétraitées en utilisant un modèle d'estimation de probabilité d'accrétion ; et
la combinaison, par le système de surveillance d'accrétion via les un ou plusieurs processeurs matériels, du score de probabilité d'accrétion et de la pluralité de statistiques de HTM normalisées pour obtenir le score d'accrétion pour le four rotatif ;

l'identification, par le système de surveillance d'accrétion via les un ou plusieurs processeurs matériels, d'une ou plusieurs actions opérationnelles à recommander à un utilisateur sur la base du score d'accrétion en utilisant une technique de recommandation d'action prédéfinie ; et
l'affichage, par le système de surveillance d'accrétion via les un ou plusieurs processeurs matériels, des une ou plusieurs actions opérationnelles sur le dispositif utilisateur ou l'exécution directe des une ou plusieurs actions opérationnelles via un système de commande distribué (DCS), dans lequel les une ou plusieurs actions opérationnelles comprennent un ou plusieurs parmi une reprogrammation de maintenance du four rotatif, un changement de conception du four rotatif, un matériau brut utilisé dans le four rotatif, et un changement de fonctionnement du four rotatif.

2. Système de surveillance d'accrétion (102), comprenant :

une mémoire (208) stockant des instructions ;
une ou plusieurs interfaces de communication (210) ; et
un ou plusieurs processeurs matériels (206) couplés à la mémoire (208) via les une ou plusieurs interfaces de communication (210), dans lequel les un ou plusieurs processeurs matériels (206) sont configurés par les instructions pour :

recevoir des données en temps réel associées à un four rotatif, dans lequel les données en temps réel comprennent une ou plusieurs parmi : des données de fonctionnement de four, des données de qualité de matériau, des données de conception de four, des données de maintenance de four et des informations de condition ambiante de four ;

prétraiter les données en temps réel en utilisant une ou plusieurs techniques de prétraitement pour obtenir des données en temps réel prétraitées, dans lequel le prétraitement comprend : la synchronisation des données en temps réel provenant d'une pluralité de sources à différentes fréquences, le nettoyage des données en temps réel en supprimant les valeurs aberrantes sur la base d'un modèle de suppression de valeurs aberrantes, l'augmentation des données en temps réel nettoyées par un modèle d'imputation et enfin la transformation des données nettoyées sur la base d'un modèle de transformation ;

obtenir des informations de groupe d'accrétion sur la base des données en temps réel prétraitées en utilisant un modèle de localisation d'accrétion, dans lequel les informations de groupe d'accrétion comprennent des informations de position d'un ou plusieurs groupes de référence, et un ou plusieurs groupes d'accrétion présents dans le four rotatif, dans lequel l'étape d'obtention des informations de groupe d'accrétion sur la base des données en temps réel prétraitées en utilisant le modèle de localisation d'accrétion comprend :

la détermination, par le système de surveillance d'accrétion via les un ou plusieurs processeurs matériels, d'un ou plusieurs profils de température de solide et de gaz sur toute la longueur du four rotatif, et d'un débit massique de matériau transporté en amont dans le four rotatif sur la base des données de fonctionnement de four, des données de qualité de matériau, des données de conception de four, et des informations de condition ambiante de four en utilisant un modèle thermique pré-entraîné compris dans le modèle de localisation d'accrétion ;

l'identification, par le système de surveillance d'accrétion via les un ou plusieurs processeurs matériels, de la position des un ou plusieurs groupes d'accrétion et des un ou plusieurs groupes de référence présents dans le four rotatif sur la base des un ou plusieurs profils de température déterminés et du débit massique en utilisant un algorithme de suivi de température compris dans le modèle de localisation d'accrétion, dans lequel l'algorithme de suivi de température détecte une ou plusieurs modifications dans des modèles de température mesurés et prédits du four rotatif sur la base de profils de température déterminés et du débit massique qui permet en outre l'identification de la position des un ou plusieurs groupes d'accrétion et des un ou plusieurs groupes de référence dans le four rotatif ; et

l'identification, par le système de surveillance d'accrétion via les un ou plusieurs processeurs matériels, de la position des un ou plusieurs groupes d'accrétion et des un ou plusieurs groupes de référence dans le four rotatif en tant qu'informations de groupe d'accrétion ;

le calcul d'un score d'accrétion pour le four rotatif sur la base, au moins en partie, des informations de groupe d'accrétion et des données en temps réel prétraitées en utilisant un modèle de notation d'accrétion, dans lequel le score d'accrétion représente une condition d'accrétion en temps réel du four rotatif, dans lequel l'étape de calcul du score d'accrétion pour le four rotatif sur la base, au moins en partie, des informations de groupe d'accrétion et des données en temps réel prétraitées en utilisant le modèle de notation d'accrétion comprend :

l'estimation, par le système de surveillance d'accrétion via les un ou plusieurs processeurs matériels, d'une métrique de transfert de chaleur (HTM) pour chaque point d'une pluralité de points présents dans chacun des un ou plusieurs groupes de référence, et du groupe d'accrétion sur la base des informations de groupe d'accrétion et des données en temps réel prétraitées en utilisant le modèle thermique pré-entraîné, dans lequel la HTM comprend un ou plusieurs coefficients de transfert de chaleur, profils de température de matériau, et profils de concentration de matériau ;

l'extraction, par le système de surveillance d'accrétion via les un ou plusieurs processeurs matériels, d'informations statistiques associées à chaque point de la pluralité de points présents dans chacun du groupe d'accrétion et du groupe de référence sur la base de la HTM estimée pour un point de référence, dans lequel les informations statistiques comprennent une pluralité de statistiques de HTM, et dans lequel la pluralité de statistiques de HTM comprend une HTM radiale, une HTM axiale, et une HTM globale ;

la normalisation, par le système de surveillance d'accrétion via les un ou plusieurs processeurs matériels, de la pluralité de statistiques de HTM associées aux un ou plusieurs groupes d'accrétion en utilisant la pluralité de statistiques de HTM associées aux un ou plusieurs groupes de référence et les données de fonctionnement de four pour obtenir une pluralité de statistiques de HTM normalisées ;

l'estimation, par le système de surveillance d'accrétion via les un ou plusieurs processeurs matériels, d'un score de probabilité d'accrétion sur la base de la pluralité de statistiques de HTM normalisées et des données en temps réel prétraitées en utilisant un modèle d'estimation de probabilité d'accrétion ; et

la combinaison, par le système de surveillance d'accrétion via les un ou plusieurs processeurs matériels, du score de probabilité d'accrétion et de la pluralité de statistiques de HTM normalisées pour obtenir le score d'accrétion pour le four rotatif ;

l'identification, par le système de surveillance d'accrétion, d'une ou plusieurs actions opérationnelles à recommander à un utilisateur sur la base du score d'accrétion en utilisant une technique de recommandation d'action prédéfinie ; et

l'affichage, par le système de surveillance d'accrétion, des une ou plusieurs actions opérationnelles sur le dispositif utilisateur ou l'exécution directe des une ou plusieurs actions opérationnelles via un système de commande distribué (DCS), dans lequel les une ou plusieurs actions opérationnelles comprennent un ou plusieurs parmi une reprogrammation de maintenance du four rotatif, un changement de conception du four rotatif, un matériau brut utilisé dans le four rotatif, et un changement de fonctionnement du four rotatif.

3. Un ou plusieurs supports de stockage d'informations lisibles par machine non transitoires comprenant une ou plusieurs instructions qui, lorsqu'elles sont exécutées par un ou plusieurs processeurs matériels, amènent :

la réception, par un système de surveillance d'accrétion, de données en temps réel associées à un four rotatif, dans lequel les données en temps réel comprennent une ou plusieurs parmi : des données de fonctionnement de four, des données de qualité de matériau, des données de conception de four, des données de maintenance de four et des informations de condition ambiante de four ;

le prétraitement, par le système de surveillance d'accrétion, des données en temps réel en utilisant une ou plusieurs techniques de prétraitement pour obtenir des données en temps réel prétraitées, dans lequel le prétraitement comprend : la synchronisation des données en temps réel provenant d'une pluralité de sources à différentes fréquences, le nettoyage des données en temps réel en supprimant les valeurs aberrantes sur la base d'un modèle de suppression de valeurs aberrantes, l'augmentation des données en temps réel nettoyées par un modèle d'imputation et enfin la transformation des données nettoyées sur la base d'un modèle de transformation ;

l'obtention, par le système de surveillance d'accrétion, d'informations de groupe d'accrétion sur la base des données en temps réel prétraitées en utilisant un modèle de localisation d'accrétion, dans lequel les informations de groupe d'accrétion comprennent des informations de position d'un ou plusieurs groupes de référence, et un ou plusieurs groupes d'accrétion présents dans le four rotatif, dans lequel l'étape d'obtention des informations de groupe d'accrétion sur la base des données en temps réel prétraitées en utilisant le modèle de localisation d'accrétion comprend :

la détermination, par le système de surveillance d'accrétion via les un ou plusieurs processeurs matériels, d'un ou plusieurs profils de température de solide et de gaz sur toute la longueur du four rotatif, et d'un débit massique de matériau transporté en amont dans le four rotatif sur la base des données de fonctionnement de four, des données de qualité de matériau, des données de conception de four, et des informations de condition ambiante de four en utilisant un modèle thermique pré-entraîné compris dans le modèle de localisation d'accrétion ;

l'identification, par le système de surveillance d'accrétion via les un ou plusieurs processeurs matériels, de la position des un ou plusieurs groupes d'accrétion et des un ou plusieurs groupes de référence présents dans le four rotatif sur la base des un ou plusieurs profils de température déterminés et du débit massique en utilisant un algorithme de suivi de température compris dans le modèle de localisation d'accrétion, dans lequel l'algorithme de suivi de température détecte une ou plusieurs modifications dans des modèles de température mesurés et prédits du four rotatif sur la base de profils de température déterminés et du débit massique qui permet en outre l'identification de la position des un ou plusieurs groupes d'accrétion et des un ou plusieurs groupes de référence dans le four rotatif ; et

l'identification, par le système de surveillance d'accrétion via les un ou plusieurs processeurs matériels, de la position des un ou plusieurs groupes d'accrétion et des un ou plusieurs groupes de référence dans le four rotatif en tant qu'informations de groupe d'accrétion ;

le calcul, par le système de surveillance d'accrétion, d'un score d'accrétion pour le four rotatif sur la base, au moins en partie, des informations de groupe d'accrétion et des données en temps réel prétraitées en utilisant un modèle de notation d'accrétion, dans lequel le score d'accrétion représente une condition d'accrétion en temps réel du four rotatif, dans lequel l'étape de calcul du score d'accrétion pour le four rotatif sur la base, au moins en partie, des informations de groupe d'accrétion et des données en temps réel prétraitées en utilisant le modèle de notation d'accrétion comprend :

l'estimation, par le système de surveillance d'accrétion via les un ou plusieurs processeurs matériels, d'une métrique de transfert de chaleur (HTM) pour chaque point d'une pluralité de points présents dans chacun des un ou plusieurs groupes de référence, et du groupe d'accrétion sur la base des informations de groupe d'accrétion et des données en temps réel prétraitées en utilisant le modèle thermique pré-entraîné, dans lequel la HTM comprend un ou plusieurs coefficients de transfert de chaleur, profils de température de matériau, et profils de concentration de matériau ;

l'extraction, par le système de surveillance d'accrétion via les un ou plusieurs processeurs matériels, d'informations statistiques associées à chaque point de la pluralité de points présents dans chacun du groupe d'accrétion et du groupe de référence sur la base de la HTM estimée pour un point de référence, dans lequel les informations statistiques comprennent une pluralité de statistiques de HTM, et dans lequel la pluralité de statistiques de HTM comprend une HTM radiale, une HTM axiale, et une HTM globale ;

la normalisation, par le système de surveillance d'accrétion via les un ou plusieurs processeurs matériels, de la pluralité de statistiques de HTM associées aux un ou plusieurs groupes d'accrétion en utilisant la pluralité de statistiques de HTM associées aux un ou plusieurs groupes de référence et les données de fonctionnement de four pour obtenir une pluralité de statistiques de HTM normalisées ;

l'estimation, par le système de surveillance d'accrétion via les un ou plusieurs processeurs matériels, d'un score de probabilité d'accrétion sur la base de la pluralité de statistiques de HTM normalisées et des données en temps réel prétraitées en utilisant un modèle d'estimation de probabilité d'accrétion ; et

la combinaison, par le système de surveillance d'accrétion via les un ou plusieurs processeurs matériels, du score de probabilité d'accrétion et de la pluralité de statistiques de HTM normalisées pour obtenir le score d'accrétion pour le four rotatif ;

l'identification, par le système de surveillance d'accrétion, d'une ou plusieurs actions opérationnelles à recommander à un utilisateur sur la base du score d'accrétion en utilisant une technique de recommandation d'action prédéfinie ; et

l'affichage, par le système de surveillance d'accrétion, des une ou plusieurs actions opérationnelles sur le dispositif utilisateur ou l'exécution directe des une ou plusieurs actions opérationnelles via un système de commande distribué (DCS), dans lequel les une ou plusieurs actions opérationnelles comprennent un ou plusieurs parmi une reprogrammation de maintenance du four rotatif, un changement de conception du four rotatif, un matériau brut utilisé dans le four rotatif, et un changement de fonctionnement du four rotatif.

FIG. 1

FIG. 1A

EP 4 488 607 B1

TO/FROM
REMOTE DEVICE <u>218</u>

COMMUNICATION
INTERFACE(S) <u>210</u>

USER
INTERFACE <u>216</u>

MEMORY
<u>208</u>

<u>212</u>

HARDWARE PROCESSOR(S) <u>206</u>

DATA PRE-
PROCESSING
MODULE <u>220</u>

ACCRETION
LOCALIZATION
MODULE <u>222</u>

ACCRETION
SCORING
MODULE <u>224</u>

RECOMMENDATION
MODULE <u>226</u>

STORAGE
INTERFACE
<u>214</u>

DATABASE
<u>204</u>

COMPUTER SYSTEM <u>202</u>

102

FIG. 2

receiving, by an accretion monitoring system via one or more hardware processors, a real-time data associated with a rotary kiln, wherein the real-time data comprises one or more of: a kiln operation data, a material quality data, a kiln design data, a kiln maintenance data and a kiln ambient condition information                                      302

pre-processing, by the accretion monitoring system via the one or more hardware processors, the real-time data using one or more pre-processing techniques to obtain a pre-processed real-time data                                      304

obtaining, by the accretion monitoring system via the one or more hardware processors, accretion cluster information based on the pre-processed real-time data using an accretion localization model, wherein the accretion cluster information comprises position information of one or more reference clusters, and one or more accretion clusters present in the rotary kiln                                      306

computing, by the accretion monitoring system via the one or more hardware processors, an accretion score for the rotary kiln based, at least in part, on the accretion cluster information and the pre-processed real-time data using an accretion scoring model, wherein the accretion score represents real-time accretion condition of the rotary kiln                                      308

FIG. 3

300

Receiving pre-processed data from data pre-processing module and accretion cluster information from Accretion Localization Module     402

Estimating plurality of Heat Transfer Metrics (HTM) for plurality of points in identified accretion and reference clusters using a Thermal Model     404

Extracting plurality of statistics comprising radial HTM, axial HTM, bulk HTM based on the HTMs calculated for accretion cluster     406

Normalizing plurality of HTM stats associated with accretion cluster with respect to reference cluster, using the operating conditions and HTM for reference clusters.     408

Estimating accretion probability score using an Accretion Probability Estimation model     410

Obtaining the accretion scores for current operating conditions     412

FIG. 4

Inputs

**Operational Conditions (Current Time series sensor data)**
1. Mass flow rate of air, fuels, solids
2. Pressures at entry exit
3. Temperatures of shell, solids, gases
4. Gas composition at exit
5. Kiln rotation RPM, tilt
6. Ambient Conditions (Temperature, Pressure, Humidity)

**Material quality (current intermittent measurements)**
1. Feed quality (moisture, impurities, size)
2. Product quality (size, specific quality parameters, composition)
3. Fuel quality (CV, composition)

**Design of kiln (static information)**
1. Length & Diameter of kiln
2. Refractory, shell architecture, dimensions

**Cluster information** (Reference and Accretion cluster coordinates)

Thermal model

Outputs

- Temperature Profiles (gas, solid, shell, refractory)
- Species concentration profiles (gas, solids)
- Heat Transfer Metric Profile (along axial and circumferential positions) for accretion and reference clusters

**Model parameters**
1. Material properties (Thermal conductivity, specific heat)
2. Flow/Chemical kinetics (Heat of Reaction, Heat transfer coefficients
3. Hyperparameters for ML/DL models

FIG. 5

Inputs

**Operational Conditions (current sensor data)**
1. Mass flow rate of air, fuels, solids
2. Pressures at entry exit
3. Temperatures of shell, solids, gases
4. Gas composition at exit
5. Kiln rotation RPM, tilt
6. Ambient Conditions (Temperature, Pressure, Humidity)

**Material quality (current intermittent measurements)**
1. Product quality (size, specific quality parameters, composition)

**Cluster information** (Reference and Accretion cluster coordinates)

**Predicted by Thermal model**
- Temperature Profiles (gas, solid, shell, refractory)
- Species concentration profiles (gas, solids)
- Heat Transfer Metric statistics estimated for accretion and reference clusters

Accretion Probability Estimation model

Outputs

Probability for high accretion

FIG. 6

EP 4 488 607 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321044276
- US 2018106683 A1
- US 8340825 B2
- CN 102305614 B
- CN 110262224 A
- IN 2235MUM2007
- US 20220179400 A1